# EUROPEAN PATENT APPLICATION

(11) **EP 1 309 122 A2**
(43) Date of publication of application: **07.05.2003**
(21) Application number: 02257484.2
(22) Date of filing: 29.10.2002
(51) Int. Cl.: H04L 1/18

(54) **Apparatus and method for data communication with retransmissions**

(30) Priority: 31.10.2001 KR 2001067309
(71) Applicant: SAMSUNG ELECTRONICS CO., LTD., Suwon-City, Kyungki-do (KR)
(72) Inventor: Park, Jeong-hoon, Seoul (KR); Lee, Yung-lyul, Seoul (KR)
(74) Representative: Geary, Stuart Lloyd

(57) **Abstract**

A data transmitting/receiving system adds identifying information to a data packet based on characteristics of the data. The identifying information can be a data type of a payload data of an IP/UDP/RTP packet and/or a temporal data sequence of the payload data. The IP/UDP/RTP packet added with the identifying information is segmented into an IP/UDP/RTP header and IP/UDP/RTP data. The segmented IP/UDP/RTP header and the IP/UDP/RTP data can be transmitted through different channels. A receiver sends retransmission control information based on the added identifying information extracted by the receiver, the retransmission control information providing retransmission time and priority information. A transmitter retransmits reception error occurring IP/UDP/RTP data according to the retransmission control information received by the transmitter. Varying the retransmission times and/or retransmission priority based on the data characteristics, accommodates data retransmission so that data more influential to data restoration in case of loss/damage can be received more stably.

## Description

The present invention relates to data reception method, comprising receiving data packet headers in a first channel, attempting to receive corresponding data packet payload data in a second channel which is less robust than the first channel, determining that the payload data corresponding to a received data packet header has been lost or corrupted and sending a retransmission request in respect of the data packet for which the payload data is determined to have been lost or corrupted, and to a data reception apparatus comprising means for receiving data packet headers in a first channel, means for receiving corresponding data packet payload data in a second channel which is less robust than the first channel, transmitter means for sending retransmission requests and processing means configured for determining that the payload data corresponding to a received data packet header has been lost or corrupted and causing the transmitter means to send a retransmission requests in respect of data packet for which the payload data is determined to have been lost or corrupted.

The present invention also relates to a data transmission method, comprising transmitting data packet headers in a first channel, transmitting corresponding data packet payload data in a second channel which is less robust than the first channel, receiving a retransmission request in respect of one of said packet and retransmitting the packet to which said request relates, and to a data transmission apparatus, comprising means for transmitting data packet headers in a first channel, means for transmitting corresponding data packet payload data in a second channel which is less robust than the first channel, means for receiving a retransmission request in respect of one of said packet and retransmission means for retransmitting the packet to which said request relates.

Data such as moving picture data (video) and audio data, which require real-time transmission (streaming), is usually transmitted using the real-time transport protocol (RTP). The user datagram protocol (UDP) is specified by the IETF AVT (Internet Engineering Task Force Audio/Video Transport) Working Group, and 280

Request for Comment (RFC) 1889 specifies the RTP that is the transport protocol for transmitting real-time application data and a real-time transport control protocol (RTCP) for transmitting control information. However, RTP does not deal with contents about resource bookings, and more particularly, RTP does not provide services like timely data transmission, quality of service (QoS) guarantee, and prevention of non-orderly transmission. In other words, it can be said that the RTP is a standard that is focused on the real-time data transmission. Typically an RTP packet is transmitted on top of UDP.

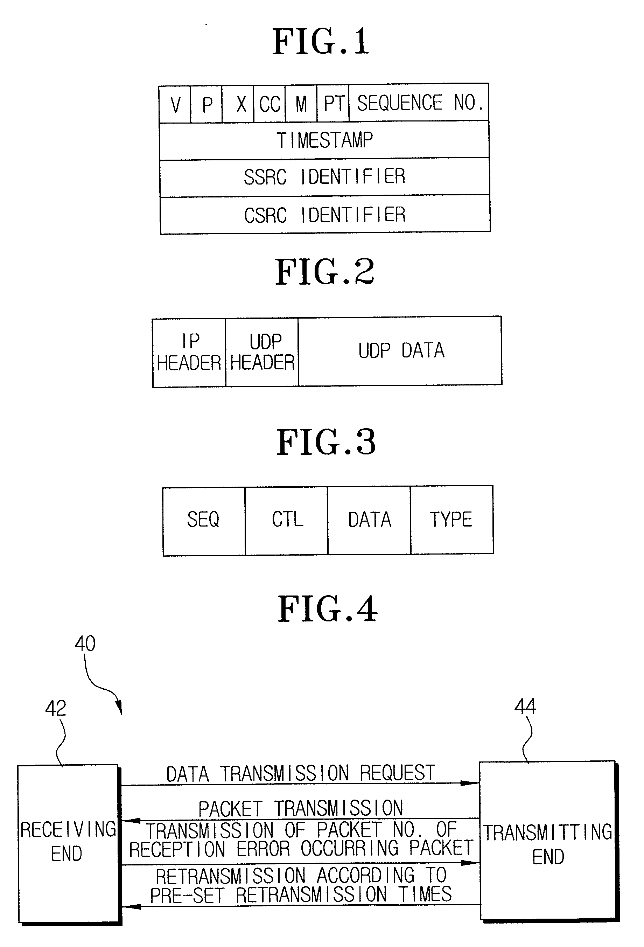

Figure 1 is a shows the structure of an RTP packet.

Referring to Figure 1, the header of an RTP packet has a fixed size and is followed by information and data. The RPT packet header comprises a version field V, a padding field P indicating whether padding octets are used, an extension field X which indicates whether there is an extension header field, a CRSC count field CC which gives the number of contributing source identifiers (CSRC), a marker field M for indicating frame boundaries or other significant events, a payload type field PT which identifies the format of the payload (see RFC 1890), a sequence number field which indicates the position of the RTP packet in a sequence of RTP packets, a 'timestamp' field which indicates the point in time that the first octet was sampled, a synchronization source (SSRC) field which identifies the data source, e.g. a camera or a microphone, and a CSRC list field which lists the sources contributing to the packet.

Following the RTP header is data formatted as a UDP packet.

Figure 2 shows the UDP packet format.

Referring to Figure 2, the UDP packet is comprised of an IP header, a UDP header and UDP data. The IP header contains the source and destination addresses, an upper layer protocol and a check sum. The UDP header contains the source and destination port numbers, the sizes of the UDP header and the data and the UDP check sum. The UDP header and the UDP data are collectively called a UDP datagram, and the IP header and the UDP datagram are collectively called an IP datagram. In other words, the RTP packet comprises the RTP header and the IP datagram (IP/UDP/RTP packet).

The RTP packet, as described with reference to Figures 1 and 2, can be transmitted through a wire or wirelessly. In transmission, due to loss of some bits or damage to the data by noise or the like, sometimes some parts of or an entire RTP packet are improperly received at the receiving end. In this case, the receiving end analyzes the packet number of the incompletely received packet and requests the transmitting end for a retransmission.

Data transmission in a mobile communication environment is carried out using a radio link protocol (RLP).

Figure 3 shows the format of an RLP packet.

Referring to Figure 3, the RLP packet comprises a sequence field (SEQ), a control field (CTL), a data field (DATA) and a form field (TYPE). SEQ field indicates the position of the packet within its sequence of packets. The CTL field contains control data, such as a password, a retransmission by NAK method data, or the like. The data field contains the payload data and in the type field indicates the form of the data frame structure.

When supporting a data service in the CDMA mobile communication system, typically the RLP (IS-707.2) is used as the link layer between the mobile station and base station. Accordingly, to transmit an RTP packet wirelessly, the RTP packet is converted into the RLP packet. In the conventional RLP layer, only a password function and a selective NAK transmission function for the retransmission of wireless link frame exist.

However, wireless systems typically very noisy. Also, co-channel interference and multi-path effects, causing fading, are problematic. All of these cause a higher possibility of loss in the wireless domain than in the wired domain. Also, current wireless communication systems have limited bandwidths for data transmission. In this respect, it is critical that the size and volume of the transmitted data be reduced. Accordingly, appropriately controlling retransmission of damaged data plays a critical role, especially in wireless regions.

Figure 4 illustrates the process of data retransmission in a conventional data transmission system.

Referring to Figure 4, in the conventional data system 40, the transmitting end 44 transmits an RTP packet to the receiving end 42 upon a data transmission request from the receiving end 42. The receiving end 42 analyzes the RTP packet and determines that it has a reception error, and sends out the sequence number of the error-containing RTP packet to the transmitting end 44. For example, among the transmitted RTP packets nos. 1∼30, when the packet sequence numbers of the reception error-containing packets are 8, 9, 10, 16, the numbers 8, 9, 10, 16 are sent to the transmitting end 44 with a retransmission request. The transmitting end 44 retransmits the RTP packets corresponding to the transmitted sequence numbers to the receiving end 42 according to predetermined retransmission times.

As described above, conventionally, retransmission of damaged packets is carried out by applying a standardized retransmission method with respect to all of the data, regardless of the transmission medium and bandwidth. That is, frequency of retransmission was predetermined and an erroneous packet was retransmitted according to such predetermined frequency, which does not consider multimedia data characteristics.

Regarding wireless data communication using RLP, in a transmission unit of RLP, data transmission is made between a mobile station, which is in the wireless domain, and a base station, which is in the wired domain. Typically in a mobile station, the RTP, UDP, IP regions (IP/UDP/RTP header) of an RTP packet are compressed. Then, the payload (e.g., multimedia data) and the compressed IP/UDP/RTP header are transmitted through (encapsulated by) the RLP as one unit. The receiving end 42 determines the packet sequence number of packets that contain errors and requests retransmissions thereof. RLP is one of those conventional transmission methods that do not consider characteristics of the data, and the retransmission times are set at the beginning of the transmission. If the receiving end 42 requests retransmission, the transmitting end 44 accepts the request if the request is below the pre-set retransmission times, but ignores the request if the request exceeds the pre-set retransmission times.

In conventional data communication systems, retransmission is carried out regardless of the characteristics of the data. Therefore, the retransmitted data cannot restore damaged data in a uniform manner. Especially with respect to moving picture data coded according to MPEG, which is comprised of intra-picture and inter-picture data, the restoration quality of the respective pictures tends to vary. Even with respect to pictures of the same kind, restoration of the data may vary according to (be affected by) the data sequence (i.e., a temporal data sequence). Accordingly, there is a need to control retransmission to reflect characteristics of the data.

A data reception method according to the present invention is characterised by generating retransmission control data on the basis of the data packet header corresponding to the lost or corrupted payload data and including said retransmission control data in said retransmission request.

A data reception apparatus according to the present invention is characterised in that the processing means is configured for generating retransmission control data on the basis of the data packet header corresponding to the lost or corrupted payload data and including said retransmission control data in said retransmission request.

Preferably, the retransmission control data relates a retransmission time or priority.

Preferably, the retransmission control data is generated on the basis of payload data type information in the data packet header corresponding to the lost or corrupted payload data.

A data transmission method according to the present invention is characterised by obtaining retransmission control information from said request and retransmitting said packet to which said request relates at a retransmission time determined on the basis of said retransmission control information.

A data transmission apparatus according to the present invention is characterised in that the retransmission means obtains retransmission control information from said request and retransmits said packet to which said request relates at a retransmission time determined on the basis of said retransmission control information.

Preferably, retransmission control data relates a retransmission time or priority.

Preferably, said retransmission time is determined additionally on the basis of the quality of the second channel.

The methods of the present invention may be combined to form a data communication method.

The apparatuses of the present invention may be combined to form a data communication system.

Additional preferred and optional features are set forth in claims 15 to 105 appended hereto.

Embodiments of the present invention will now be described, by way of example, with reference to Figures 5 to 12 of the accompanying drawings, in which:
Figure 1 shows the structure of an RTP packet;
Figure 2 shows the structure of a UDP packet;
Figure 3 shows the structure of an RLP packet;
Figure 4 illustrates the process of data retransmission in a conventional data transmission system;
Figure 5 is a block diagram of a data transmitting apparatus according to the present invention;
Figure 6 is a flowchart of data transmission according to the present invention;
Figure 7 is a flowchart of a retransmission process according to the present invention;
Figure 8 is a flowchart of a retransmission process according to the present invention;
Figure 9 is a block diagram of a data receiving apparatus according to the present invention;
Figure 10 is a flowchart of data reception according to the present invention;
Figure 11 is a block diagram of a data communication system according to the present invention; and
Figure 12 is a flowchart of a data communication according to the present invention.

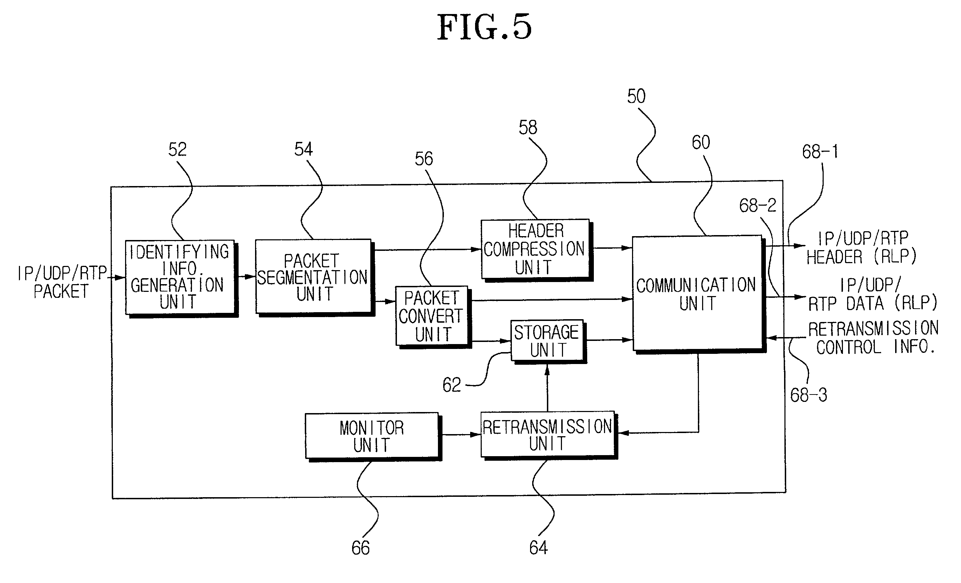

Referring to Figure 5, a data transmitting apparatus 50 includes an identifying information generation unit 52, a packet segmentation unit 54, a packet conversion unit 56, a header compression unit 58, a communication unit 60, a storage unit 62, a retransmission unit 64, and a monitor unit 66.

The identifying information generation unit 52 extracts identification information from the RTP header of an IP/UDP/RTP header structure of a received IP/UDP/RTP packet. The identifying information specifies the characteristics of a multimedia (video/audio) data packet used in real-time (streaming) multimedia applications. For example, the characteristics can be the data type of the payload data of the IP/UDP/RTP packet and/or the temporal sequence position of the payload data of the IP/UDP/RTP packet. The operation of the identifying information generation unit 52 is described below with reference to the case where the payload data specifies moving picture data (video) coded by the MPEG method.

The MPEG image data comprises intra-frame data that is derived from one frame only and an inter-frame data that is constructed by analysing the difference between two successive frames. The inter-image data has temporal aspect. A frame coded as intra-frame data can be reconstructed solely from the intra-frame coded data for that frame and can therefore serve as a reference location for random access. Intraframe coded frames are inserted into the MPEG stream at regular intervals. Accordingly, in the MPEG stream, the intra-frame coded frames play a more important role than the inter-frame coded frames. With regard to the inter-frame coded frames, earlier frames have higher importance than later frames.

The identifying information generation unit 52 analyzes the payload data from the received IP/UDP/RTP packet and determines a data type (characteristic) of the payload data. In other words, the identifying information generation unit 52 analyzes the payload data to determine whether the payload data is an intra frame coded frame or an inter-frame coded frame (i.e. determine the characteristics of the payload data). Also, the identifying information generation unit 52 analyzes the order of creation, if the payload data relates to an inter-frame coded frame. According to the payload data type and/or the temporal sequence as determined, the identifying information generation unit 52 adds, respectively, defined identifying information to the IP/UDP/RTP header. The identifying information can be ! for intra-frame coded frame data and 2 for inter-frame coded frame data, for example. Accordingly, in this example, the identifying information '2N' would indicate inter-frame coded frame data of the Nth order. In other words, by adding identifying information like 2a, 2b, ..., 2n with respect to the inter-frame coded frame data, the order of picture generation is indicated. The identifying information can be added to the UDP header of the IP/UDP/RTP header. However, the identifying information can also be added to any unused area of the IP header or the RPT header of the IP/UDP/RTP header of the IP/UDP/RTP packet.

The packet segmentation unit 54 divides the IP/UDP/RTP packet into an IP/UDP/RTP header and IP/UDP/RTP data. By doing this, the IP/UDP/RTP header, which contains critical information about the IP/UDP/RTP packet, can be transmitted through a more stable channel. Especially in next generation wireless communication systems, such as IMT2000, a data packet is transmitted and received according to the present invention with the header separate from the data through separate channels for a more efficient data communication. The header is, of course, transmitted and received through the more stable channel than the channel transmitting and receiving data.

The packet conversion unit 56 converts the IP/UDP/RTP data into a radio link protocol (RLP) packet. The packet conversion unit 56 is provided in the case of data communication in wireless communication environments. In the case of wireless communication, data is transmitted by the RLP unit, which is a transmission unit for a radio link layer (RLL), between a wireless mobile station and a base station. The packet conversion unit 56 can also be provided in the communication unit 60.

The header compression unit 58 compresses the IP/UDP/RTP header. Generally, in the header of the IP/UDP/RTP packet transmitted from a particular source to a particular destination, the same information is repeatedly written. For example, information such as destination address and source address of the IP/UDP/RTP header are written repeatedly. Accordingly, after initial transmission of the IP/UDP/RTP header, by excluding repeated portions of the IP/UDP/RTP header, or by adding identifying information to the repeated portions, the data can be compressed to reduce transmission load.

The IP/UDP/RTP data divided by the packet segmentation unit 56 is stored in the storage unit 62. The IP/UDP/RTP data stored in the storage unit 62 is read upon receipt of a retransmission request from a receiving end (not shown), to retransmit the requested IP/UDP/RTP data to the receiving end.

The communication unit 60 transmits the IP/UDP/RTP header and the IP/UDP/RTP data, and receives retransmission control information. In wireless communication environments, the IP/UDP/RTP data formatted in the RLP packet (encapsulated in the RPL packet) is transmitted to the receiving end. When the IP/UDP/RTP header and the IP/UDP/RTP data are transmitted through different selected channels 68-1, 68-2, respectively, the selected channel 68-1 transmitting the IP/UDP/RTP header is more stable than the selected channel 68-2 transmitting the IP/UDP/RTP data. The retransmission control information can be transmitted through a separate channel 68-3.

The retransmission unit 64 retransmits the IP/UDP/RTP data according to the received retransmission control information. The retransmission control information typically includes the packet sequence number of the corrupted or missing packet and retransmission information. Reception errors at the receiving end can be, for example, non-reception of an IP/UDP/RTP data and/or reception of an IP/UDP/RTP data with damaged bits. The retransmission information is set by the receiving end and can be based on control numbers, typically retransmission times, retransmission priority, etc. The retransmission unit 64 analyzes the packet number of the corrupted or missing packet and retransmits the missing or corrupted packet according to the identifying data and/or other pre-set retransmission information, such as retransmission times and priority.

The monitor unit 66 monitors the status of the channel through which the IP/UDP/RTP data is transmitted. The channel status is input to the retransmission unit 64. If the channel status falls within a range between lower and upper thresholds, the retransmission unit 64 carries out retransmission according to the received retransmission control information. If the channel status is below the lower threshold, and if the retransmission control information contains the sequence number of the corrupted or missing packet and retransmission times, the retransmission unit 64 first retransmits the IP/UDP/RRP data with lower retransmission times than the pre-set/determined retransmission times. If the channel status is above the upper threshold, the retransmission unit 64 first retransmits the IP/UDP/RTP data with higher retransmission times (e.g., a higher number of/more frequent retransmissions) than the pre-set/determined retransmission times.

If the received retransmission control information includes the sequence number of corrupted or missing packet and a retransmission priority therefor, and if the channel status is determined to be below the lower threshold, the retransmission unit 64 first retransmits the packet with a lower retransmission priority than a preset/determined retransmission priority. If the channel status is above the upper threshold, the retransmission unit 64 first retransmits the packet with a higher retransmission priority than the pre-set/determined retransmission priority, for example, as often as two or more times higher. Therefore, based on the status of the IP/UDP/RTP data (RLP) channel 68-2, the retransmission unit 64 prioritizes in-queue retransmissions according to the retransmission time information or the retransmission priority information of the IP/UDP/RTP data.

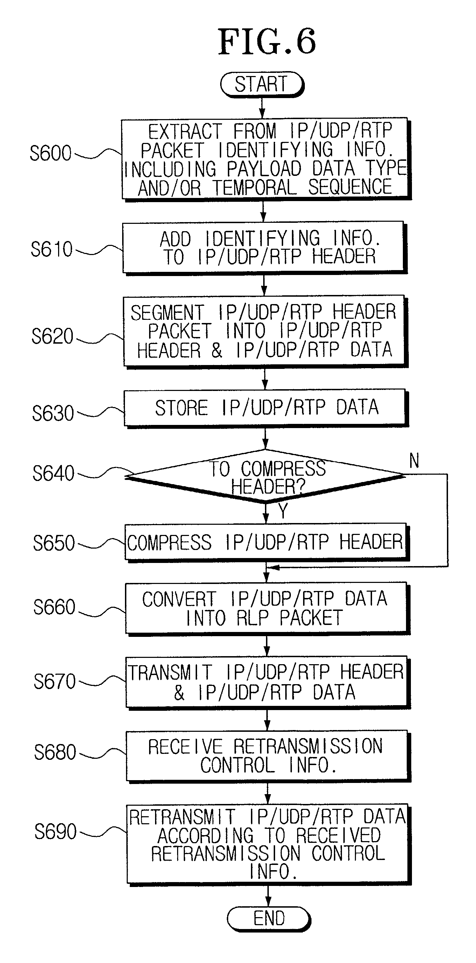

Referring to Figure 6, in operation 600 the identifying information generation unit 52 extracts identifying information from the RTP header of an IP/UDP/RTP header structure of a received IP/UDP/RTP packet. The identifying information includes the data type of the payload data and/or the temporal sequence data. Based on the type of the payload data and/or the temporal sequence data, as analyzed, the identifying information generation unit 52 adds the respectively defined identifying information to the IP/UDP/RTP header, in operation 610.

In operation 620, the packet segmentation unit 54 divides the IP/UDP/RTP packet into the IP/UDP/RTP header and the IP/UDP/RTP data. The packet segmentation unit transmits the IP/UDP/RTP header, which contains more important information, to a more stable channel. Especially in the next generation wireless communication systems (technologies), like IMT2000, for more efficient data transmission and reception, the data packet is divided into the header and the data segments and the header and the data are separately transmitted and received.

The selected channel, where the header with more important information is transmitted, is more stable than the selected channel where the data is transmitted.

In operation 630, after being divided by the packet segmentation unit 56, the IP/UDP/RTP data is stored in the storage unit 62. Upon request from the receiving end, the IP/UDP/RTP data stored in the storage unit 62 is read and used for retransmission.

In operation 650, the header compression unit 58 compresses the separated IP/UDP/RTP header, if in operation 640 header compression option is set.

In operation 660, the packet conversion unit 56 converts the IP/UDP/RTP data into a radio link protocol (RLP) packet. The packet conversion unit 56 is provided for data communication in wireless communication environments.

In operation 670, the communication unit 60 transmits the IP/UDP/RTP header and the IP/UDP/RTP data. When the retransmission unit 64 receives retransmission control information from the receiving end after the IP/UDP/RTP header and the IP/UDP/RTP data have been transmitted, in operation 680, the retransmission unit 64 retransmits the IP/UDP/RTP data according to the retransmission control information as received, in operation 690.

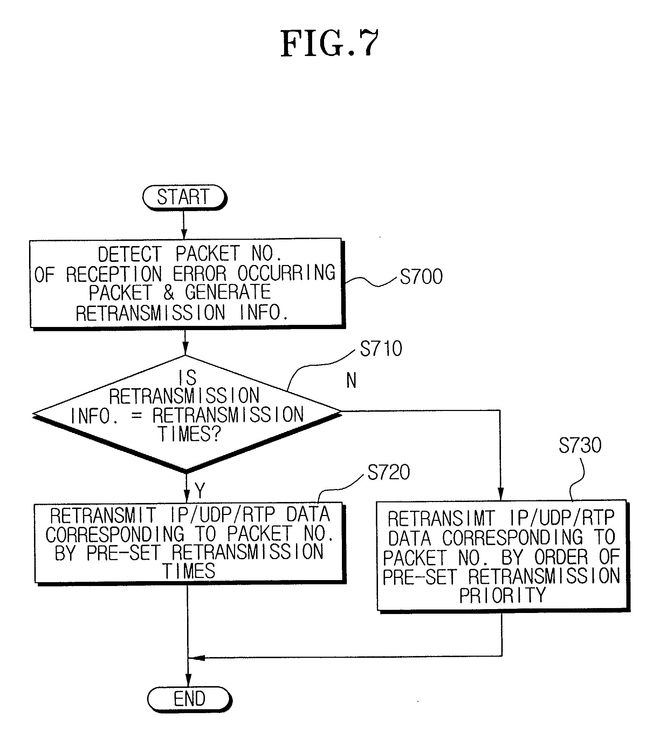

Referring to Figures 6 and 7, when the retransmission control information is received through the communication unit 60 by a transmitting end in operation 680, then the retransmission unit 64 detects the packet sequence number of the IP/UDP/RTP data that is corrupted or missing in operation 700. The retransmission control information received by the transmitting end can include retransmission information for retransmission times and priority. In operation 710, the retransmission unit 64 of the transmitting end determines whether the retransmission information received from the receiving end is retransmission times.

If in operation 710 the retransmission information is the retransmission times, the retransmission unit 64 retransmits the IP/UDP/RTP data corresponding to the packet sequence number of the corrupted or missing packet, by a pre-set/determined/received retransmission time in operation 720. If in operation 710 the transmission information is the retransmission priority, the retransmission unit 64 retransmits the IP/UDP/RTP data corresponding to the packet sequence number of the corrupted or missing packet in operation 730, according to a preset/determined retransmission priority.

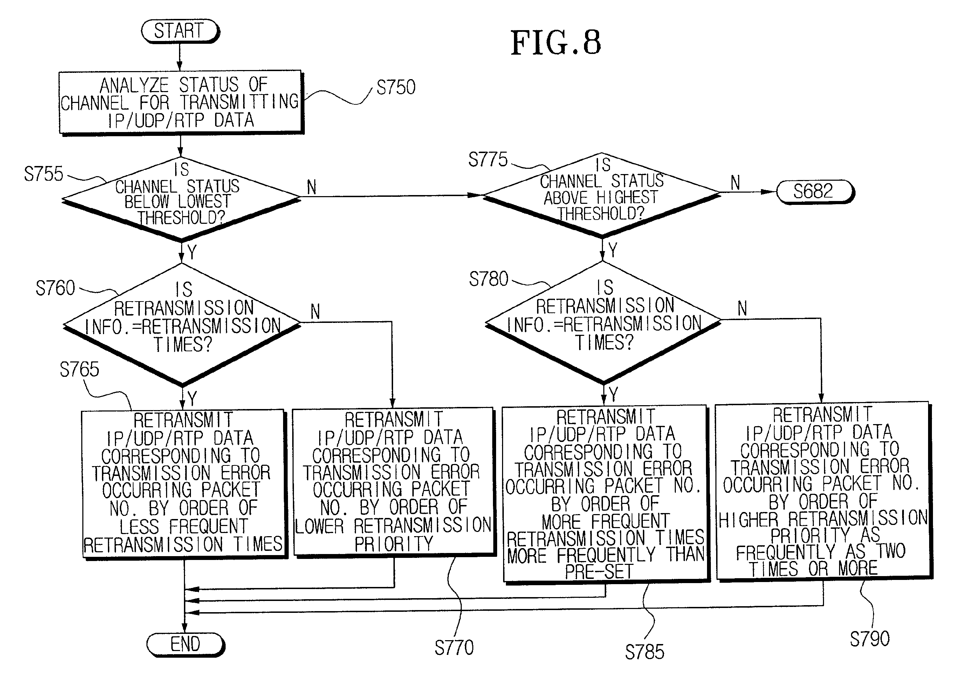

Referring to Figures 6 and 8, in operation 680 when the retransmission control information is received through the communication unit 60, retransmission is carried out according to a status of the channel in which the IP/UDP/RTP data is transmitted. In operation 750, the monitor unit 66 analyzes the status of the channel in which the IP/UDP/RTP data is transmitted, and outputs a channel status value to the retransmission unit 64. If, in operation 755, the channel status is below a lower threshold, the retransmission unit 64 determines whether the retransmission information included in the received retransmission control information is the retransmission times, in operation 760.

If in operation 760 the retransmission information is the retransmission times, in operation 765 the retransmission unit 64 first retransmits the IP/UDP/RTP data corresponding to the packet number of the transmission error occurring packets according to a lower retransmission time (e.g., a lower number of/less frequent retransmissions) than a pre-set retransmission time. If in operation 760 the retransmission information is the retransmission priority, in operation 770 the retransmission unit 64 first retransmits the IP/UDP/RTP data corresponding to the packet number of the transmission error occurring packets according to a lower retransmission priority than a pre-set retransmission time.

If, in operation 775, the status of the channel is above an upper threshold, the monitor unit 66 determines whether the retransmission information included in the received retransmission control information is the retransmission times in operation 780.

If, in operation 780, the retransmission information is determined to be the retransmission times, among the IP/UDP/RTP data corresponding to the packet sequence numbers of the corrupted or missing packets, the retransmission unit 64 first retransmits the IP/UDP/RTP data according to a higher retransmission time (e.g., higher number of /more frequent retransmissions) than a pre-set retransmission time in operation 785. If, in operation 780, the retransmission information is determined to be the retransmission priority, among the IP/UDP/RTP data corresponding to the packet sequence numbers of the corrupted or missing packets, the retransmission unit 64 first retransmits the IP/UDP/RTP data according to a higher retransmission priority than a pre-set retransmission priority (e.g. two or more times higher ).

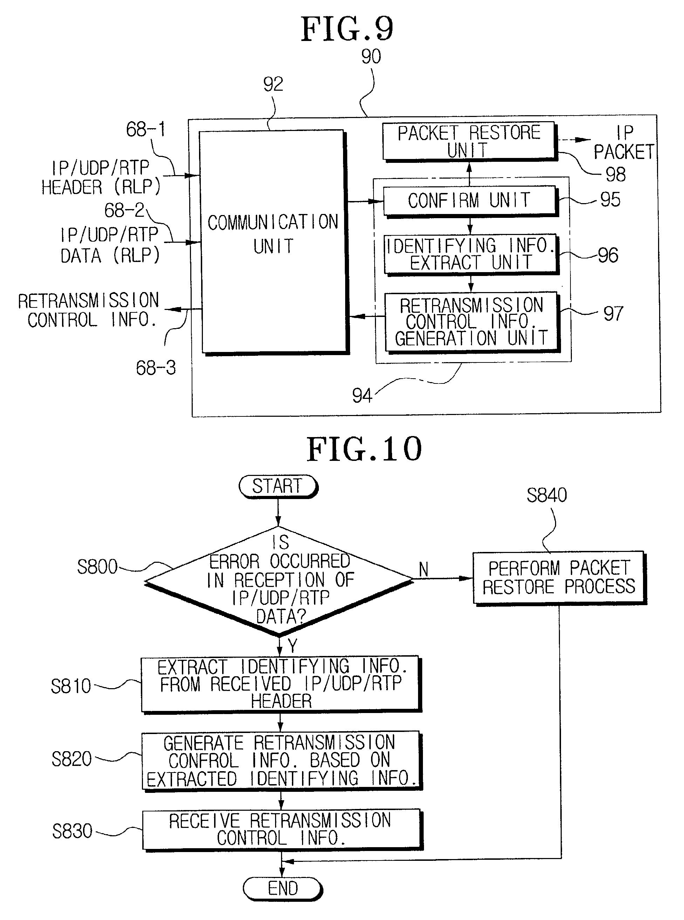

Referring to Figure 9, the data receiving apparatus 90 includes a communication unit 92, a retransmission control unit 94 and a packet restore unit 98. The communication unit 92 receives the IP/UDP/RTP header and IP/UDP/RTP data through different channels 68-1, 68-2. The communication unit 92 can also transmit retransmission control information through a separate channel 68-3. The channel 68-1 receiving the IP/UDP/RTP header is more stable than the channel 68-2 receiving the IP/UDP/RTP data.

If an error occurs in reception of the IP/UDP/RTP data, the retransmission control unit 94 extracts from the received IP/UDP/RTP header the added identifying information, and generates the retransmission control information based on the extracted identifying information. Here, the added identifying information includes the data type of the payload data and/or the temporal sequence data.

The retransmission control unit 94 includes a confirm unit 95, an identifying information extract unit 96 and a retransmission control information generation unit 97. The confirm unit 95 confirms error occurrences in the reception of IP/UDP/RTP data corresponding to received IP/UDP/RTP headers. The reception errors can include loss of IP/UDP/RTP data and reception of IP/UDP/RTP data having some bits damaged.

The identifying information generation unit 96 extracts the added identifying information from the IP/UDP/RTP header corresponding to a reception error occurring IP/UDP/RTP data. The identifying information is generated in the data transmitting apparatus 50 of Figure 5 based on data information from the IP/UDP/RTP packet. The identifying information includes a data type of the payload data in the IP/UDP/RTP header and/or a temporal data sequence.

According to the extracted identifying information, the retransmission control information generation unit 97 generates retransmission control information including a packet sequence number and retransmission information for the corrupted or missing IP/UDP/RTP data. The retransmission information includes retransmission times and/or retransmission priority, that are set according to the added identifying information indicating importance of the reception error occurring IP/UDP/RTP data. The generated retransmission control information is transmitted to the data transmitting apparatus 50 through the communication unit 92.

The IP/UDP/RTP data having no errors is combined with the IP/UDP/RTP header corresponding to the IP/UDP/RTP data in the packet restore unit 98, thereby producing the IP/UDP/RTP packet. After being restored, the IP/UDP/RTP packet is used by the data receiving apparatus 90 or an external apparatus. If the payload data of the IP/UDP/RTP packet is an MPEG picture, the picture is decompressed and restored by the MPEG decoder and output to a display.

Referring to Figure 10, in operation 800 when the IP/UDP/RTP header is received through the communication unit 92, the confirmation unit 95 confirms occurrence of an error in the IP/UDP/RTP data corresponding to an IP/UDP/RTP header.

If, in operation 800, the IP/UDP/RTP data is confirmed to have been received without an error, in operation 840 the packet restore unit 98 carries out a packet restore process.

If in operation 800 the occurrence of a reception error is confirmed, the identifying information extract unit 96 extracts identifying information, which is added to the IP/UDP/RTP header by the transmitter 50, from the received IP/UDP/RTP header in operation 810. In operation 820, the retransmission control information generation unit 97 generates the retransmission control information according to the extracted identifying information. The retransmission control information typically includes a packet sequence number for the missing or corrupted IP/UDP/RTP data and retransmission information. Also, the retransmission information typically includes retransmission times information and/or a retransmission priority pre-set according to the added identifying information. In operation 830, the generated retransmission control information is transmitted to the data transmitting apparatus 50 through the communication unit 92.

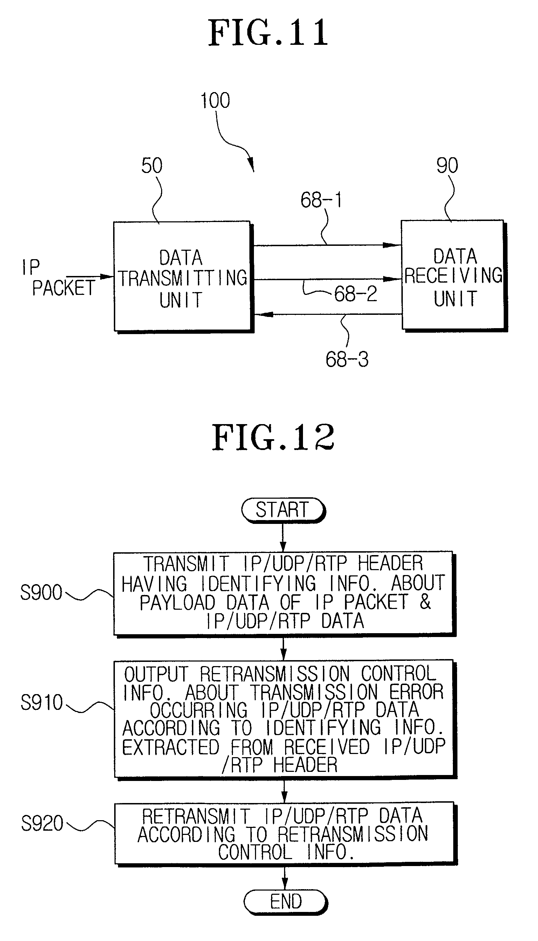

Referring to Figures 11 and 12, a data communication system 100 according to the present invention includes a data transmitting unit 50 and a data receiving unit 90.

In operation 900, the data transmitting unit 50 transmits a IP/UDP/RTP header having added identifying information about the payload data of the IP/UDP/RTP packet together with the IP/UDP/RTP data. In operation 910, the data receiving unit 90 receives the IP/UDP/RTP header and the IP/UDP/RTP data, and in the event of a corruption or loss of the IP/UDP/RTP data, the data receiving unit 90 outputs retransmission control information according to the added identifying information extracted from the received IP/UDP/RTP header. In operation 920, when the data transmitting unit 50 receives the retransmission control information from the data receiving unit 90, the data transmitting unit 50 retransmits the corrupted or missing IP/UDP/RTP data according to the received retransmission control information.

Since the structure and operation of the data transmitting unit 50 and the data receiving unit 90 are identical to the structure and operation of the data transmitting unit 50 and the data receiving unit 90 described above with reference to Figures 5 and 9, the description thereof will be omitted. Likewise, since operations 910 to 930 are identical to the data transmitting method and the data receiving method described above with reference to Figures 6 to 8 and Figure 10, the description thereof will also be omitted.

A data communication system according to the present invention adds identifying information to a data packet based on characteristics of the data. In the case of multimedia (video/audio) data being transmitted over an IP network using RTP, the identifying information can be the data type of the payload data of an IP/UDP/RTP packet and/or temporal sequence data for the payload data. In the case of transmitting an RTP packet wirelessly, the RTP packet is encapsulated in an RLP packet the IP/UDP/RTP packet supplied with the identifying information can be segmented into an IP/UDP/RTP header and IP/UDP/RTP data, encapsulated in RLP packets and transmitted through different channels. A receiver sends retransmission control information based on the added identifying information extracted by the receiver, the retransmission control information providing retransmission time and priority information. A transmitter retransmits loss opr corrupted IP/UDP/RTP data according to the retransmission control information received by the transmitter.

Although the above-described preferred embodiment of the present invention focused on the retransmission occurring during the data transmission and reception between the wireless terminal and the base station by compressing the IP/UDP/RTP header of the multimedia data, the present invention is not limited to such an embodiment and the data transmitting method and the data receiving method according to the present invention can also be applied to other protocols and/or wired communications (i.e., the present invention's processes of packet data characteristic addition, segmentation, compression, encapsulation, channel selection, transmission and retransmission according to the data characteristics, can be done with other communication protocol technologies. The processes of the invention to control retransmission responsive to data characteristics of lost/damages data can be embodied in software and/or hardware, for example, as part of networked data transmitter 50 and data receiver 90, using known techniques. In addition, those skilled in the art would easily note that the present invention could also be applied to a case of obtaining header information through par sing of the header data.

According to the data transmitting/receiving system of the present invention, by varying the retransmission times and retransmission priority according to the characteristics of the transmitted data, retransmission based on the characteristics of the data becomes possible and the data that is more influential/important to data restoration can be more stably received. Furthermore, by varying the retransmission times and retransmission priority based on the status of the channel that transmits the data, the channel utilization is maximized, and the reception error occurring data can be effectively retransmitted. Also, by using a protocol stack that compresses and restores the data header, more efficient use of the channel is guaranteed during the data transmission and retransmission.

## Claims

1. A data reception method comprising:
receiving data packet headers in a first channel (68-1);
attempting to receive corresponding data packet payload data in a second channel (68-2) which is less robust than the first channel (68-1);
determining that the payload data corresponding to a received data packet header has been lost or corrupted; and
sending a retransmission request in respect of the data packet for which the payload data is determined to have been lost or corrupted,
**characterised by**
generating retransmission control data on the basis of the data packet header corresponding to the lost or corrupted payload data; and
including said retransmission control data in said retransmission request.

2. A method according to claim 1, wherein said retransmission control data relates a retransmission time or priority.

3. A method according to claim 1 or 2, wherein the retransmission control data is generated on the basis of payload data type information in the data packet header corresponding to the lost or corrupted payload data.

4. A data reception apparatus comprising:
means (92) for receiving data packet headers in a first channel (68-1);
means (92) for receiving corresponding data packet payload data in a second channel (68-2) which is less robust than the first channel (68-1);
transmitter means (92) for sending retransmission requests; and
processing means (94) configured for determining that the payload data corresponding to a received data packet header has been lost or corrupted and causing the transmitter means to send a retransmission requests in respect of data packet for which the payload data is determined to have been lost or corrupted,
**characterised in that**
the processing means (94) is configured for generating retransmission control data on the basis of the data packet header corresponding to the lost or corrupted payload data and including said retransmission control data in said retransmission request.

5. An apparatus according to claim 4, wherein said retransmission control data relates a retransmission time or priority.

6. An apparatus according to claim 4 or 5, wherein the retransmission control data is generated on the basis of payload data type information in the data packet header corresponding to the lost or corrupted payload data.

7. A data transmission method comprising:
transmitting data packet headers in a first channel (68-1);
transmitting corresponding data packet payload data in a second channel (68-2) which is less robust than the first channel (68-1);
receiving a retransmission request in respect of one of said packet; and
retransmitting the packet to which said request relates,
**characterised by**
obtaining retransmission control information from said request; and
retransmitting said packet to which said request relates at a retransmission time determined on the basis of said retransmission control information.

8. A method according to claim 7, wherein said retransmission control data relates a retransmission time or priority.

9. A method according to claim 7 or 8, wherein said retransmission time is determined additionally on the basis of the quality of the second channel.

10. A data transmission apparatus comprising:
means (60) for transmitting data packet headers in a first channel (68-1);
means (60) for transmitting corresponding data packet payload data in a second channel (68-2) which is less robust than the first channel (68-1);
means (60) for receiving a retransmission request in respect of one of said packet; and
retransmission means (60, 62, 64) for retransmitting the packet to which said request relates,
**characterised in that**
the retransmission means (60, 62, 64) obtains retransmission control information from said request and retransmits said packet to which said request relates at a retransmission time determined on the basis of said retransmission control information.

11. An apparatus according to claim 10, wherein said retransmission control data relates a retransmission time or priority.

12. An apparatus according to claim 10 or 11, wherein said retransmission time is determined additionally on the basis of the quality of the second channel.

13. A data communication method comprising a data transmission method according to claim 7, 8 or 9 and a data reception method according to claim 1, 2 or 3.

14. A data communication system comprising an apparatus according to claim 10, 11 or 12 and a data reception apparatus according to claim 4, 5 or 6.

15. A data transmitting/receiving system, comprising:
an identifying data generator generating identifying data based on an IP/UDP/RTP packet and adding the identifying data to the IP/UDP/RTP packet, the identifying data comprising a data type of payload data of the IP/UDP/RTP packet and/or a temporal data sequence of the payload data;
a packet divider segmenting the IP/UDP/RTP data added with identifying data into an IP/UDP/RTP header and IP/UDP/RTP data;
a communication unit transmitting the segmented IP/UDP/RTP header and the IP/UDP/RTP data, and receiving retransmission control information; and
a retransmission unit retransmitting reception error occurring IP/UDP/RTP data according to the received retransmission control information.

16. The data transmitting/receiving system of claim 15, wherein the identifying data generator adds the identifying data to a UDP header of the IP/UDP/RTP header.

17. The data transmitting/receiving system of claim 15, wherein the type of the payload data is one of an intra picture and an inter picture.

18. The data transmitting/receiving system of claim 17, wherein, with respect to the intra picture, the identifying data added by the identifying data generator specifies a higher priority than a priority specified by the identifying data added for the inter picture.

19. The data transmitting/receiving system of claim 15, wherein the identifying data generator adds the identifying data specifying a priority according to the temporal data sequence.

20. The data transmitting/receiving system of claim 15, further comprising a packet converter converting the IP/UDP/RTP data into a radio link protocol (RLP) packet.

21. The data transmitting/receiving system of claim 15, further comprising a header compression unit compressing the IP/UDP/RTP header.

22. The data transmitting/receiving system of claim 15, wherein the IP/UDP/RTP header and the IP/UDP/RTP data are transmitted to different channels, respectively.

23. The data transmitting/receiving system of claim 22, wherein the channel transmitting the IP/UDP/RTP header has a lower transmission error rate than the channel transmitting the IP/UDP/RTP data.

24. The data transmitting/receiving system of claim 15, wherein the retransmission control information comprises a packet number of reception error occurring IP/UDP/RTP data and retransmission times information.

25. The data transmitting/receiving system of claim 24, wherein, when the retransmission unit receives the retransmission control information, the retransmission unit retransmits the IP/UDP/RTP data corresponding to the packet number of the IP/UDP/RTP data according to the received retransmission times information of each IP/UDP/RTP data, respectively.

26. The data transmitting/receiving system of claim 15, further comprising a monitor monitoring a status of a channel where the IP/UDP/RTP data is transmitted, wherein,
when the status of the channel transmitting the IP/UDP/RTP data is below a lowest threshold, the retransmission unit retransmits the IP/UDP/RTP data according to lower retransmission times than pre-set retransmission times.

27. The data transmitting/receiving system of claim 26, wherein, when the status of the channel transmitting the IP/UDP/RTP data is above a highest threshold, the retransmission unit retransmits the IP/UDP/RTP data according to higher retransmission times than the pre-set retransmission times.

28. The data transmitting/receiving system of claim 15, wherein the retransmission control information includes a packet number of the reception error occurring IP/UDP/RTP and a retransmission priority.

29. The data transmitting/receiving system of claim 28, wherein, when the retransmission unit receives the retransmission control information, the retransmission unit retransmits the IP/UDP/RTP data, for which the retransmission is requested, according to the received retransmission control information and according to the received retransmission priority.

30. The data transmitting/receiving system of claim 28, further comprising a monitor monitoring a status of a channel where the IP/UDP/RTP data is transmitted, wherein,
when the status of the channel transmitting the IP/UDP/RTP data is below a lowest threshold, the retransmission unit retransmits the IP/UDP/RTP data according to a lower retransmission priority than the received retransmission priority.

31. The data transmitting/receiving system of claim 30, wherein, when the status of the channel for transmitting the IP/UDP/RTP data is above a highest threshold, the retransmission unit retransmits the IP/UDP/RTP data according to a retransmission priority two times or more higher than the received retransmission priority.

32. A data transmitting/receiving method, comprising
generating an IP/UDP/RTP packet with added identifying data, the identifying data comprises a data type of payload data of the IP/UDP/RTP packet and/or a temporal data sequence of the payload data;
segmenting the IP/UDP/RTP packet added with the identifying data into an IP/UDP/RTP header and IP/UDP/RTP data; and
transmitting the segmented IP/UDP/RTP header and the IP/UDP/RTP data.

33. The data transmitting/receiving method of claim 32, wherein the identifying data is added to a UDP header of the IP/UDP/RTP header.

34. The data transmitting/receiving method of claim 32, wherein the type of the payload data is either an intra picture or an inter picture.

35. The data transmitting/receiving method of claim 34, wherein, with respect to the intra picture, the added identifying data specifies a higher priority than a priority specified by the identifying data added for the inter picture.

36. The data transmitting/receiving method of claim 32, wherein the added identifying data specifies a priority according to the temporal data sequence.

37. The data transmitting/receiving method of claim 32, wherein the IP/UDP/RTP header and the IP/UDP/RTP data are transmitted in a radio link protocol (RLP) packet.

38. The data transmitting/receiving method of claim 32, further comprising compressing the IP/UDP/RTP header, prior to the transmitting.

39. The data transmitting/receiving method of claim 32, further comprising receiving a retransmission control information; and
retransmitting transmission error occurring IP/UDP/RTP data according to the retransmission control information.

40. The data transmitting/receiving method of claim 39, wherein the retransmission control information comprises a packet number of the transmission error occurring IP/UDP/RTP data and retransmission times.

41. The data transmitting/receiving method of claim 40, wherein the IP/UDP/RTP data corresponding to the packet number is retransmitted according to the received retransmission times.

42. The data transmitting/receiving method of claim 39, wherein the retransmission control information includes a packet number of the transmission error occurring IP/UDP/RTP data and a retransmission priority.

43. The data transmitting/receiving method of claim 32, wherein the IP/UDP/RTP data corresponding to the packet number is retransmitted according to the received retransmission priority.

44. The data transmitting/receiving method of claim 39, wherein the IP/UDP/RTP header and the IP/UDP/RTP data are transmitted to different channels, respectively.

45. The data transmitting/receiving method of claim 44, wherein the channels are wireless channels, and the channel transmitting the IP/UDP/RTP header has a lower transmission error rate than the channel transmitting the IP/UDP/RTP data.

46. The data transmitting/receiving method of claim 44, wherein the retransmission control information includes a packet number of the transmission error occurring IP/UDP/RTP data and retransmission times, wherein,
when a status of the channel transmitting the IP/UDP/RTP data is below a lowest threshold, the IP/UDP/RTP data is retransmitted according to lower retransmission times than the received retransmission times.

47. The data transmitting/receiving method of claim 46, wherein, when the status of the channel transmitting the IP/UDP/RTP data is above a highest threshold, the IP/UDP/RTP data is retransmitted according to higher retransmission times than the received retransmission times.

48. The data transmitting/receiving method of claim 44, wherein the retransmission control information includes a packet number of the transmission error occurring IP/UDP/RTP data and a retransmission priority, wherein,
when a status of the channel transmitting the IP/UDP/RTP data is below a lowest threshold, the IP/UDP/RTP data is retransmitted according to a lower retransmission priority than the received retransmission priority.

49. The data transmitting/receiving method of claim 48, wherein when the status of the channel transmitting the IP/UDP/RTP data is above a highest threshold, the IP/UDP/RTP data is retransmitted according to a retransmission priority two times or more higher than the received retransmission priority.

50. A data receiving system, comprising:
a communication unit receiving an IP/UDP/RTP header and IP/UDP/RTP data, and transmitting retransmission control information; and
a retransmission unit extracting identifying data from the IP/UDP/RTP header when there occurs a reception error in the IP/UDP/RTP data and transmitting the retransmission control information which is generated based on the extracted identifying data, the identifying data comprising a data type of payload data of the IP/UDP/RTP data and/or a temporal data sequence of the payload data.

51. The data receiving system of claim 50, wherein the retransmission unit comprises:
a check unit checking whether there is a reception error in the IP/UDP/RTP data corresponding to the received IP/UDP/RTP header;
an identifying data extractor extracting the identifying data from the IP/UDP/RTP header corresponding to the reception error occurring IP/UDP/RTP data; and
a retransmission control information generation unit generating the retransmission control information according to the extracted identifying data.

52. The data receiving system of claim 50, wherein the retransmission control information includes a packet number of the reception error occurring IP/UDP/RTP data and retransmission times.

53. The data receiving system of claim 50, wherein the retransmission control information includes a packet number of the reception error occurring IP/UDP/RTP data and a retransmission priority.

54. The data receiving system of claim 52, wherein the IP/UDP/RTP header and the IP/UDP/RTP data are received through different channels, respectively.

55. A data receiving method, comprising :
receiving an IP/UDP/RTP header and IP/UDP/RTP data;
confirming an occurrence of reception error in the IP/UDP/RTP data;
extracting identifying data from the IP/UDP/RTP header, the identifying data comprising a data type of payload data of the IP/UDP/RTP data and/or a temporal data sequence of the payload data;
generating retransmission control information based on the extracted identifying data; and
transmitting the generated retransmission control information.

56. The data receiving method of claim 55, wherein the retransmission control information includes a packet number of the IP/UDP/RTP data and retransmission times.

57. The data receiving method of claim 55, wherein the retransmission control information includes a packet number of the reception error occurring IP/UDP/RTP data and a transmission priority.

58. The data receiving method of claim 55, wherein the IP/UDP/RTP header and the IP/UDP/RTP data are received from different t channels, respectively.

59. A data transmitting/receiving system, comprising:
a data transmission unit transmitting an IP/UDP/RTP packet having identifying data about payload data of the IP/UDP/RTP packet ; and
a data reception unit receiving the IP/UDP/RTP packet, and when the IP/UDP/RTP packet is not received, the data reception unit extracting the identifying data from the received IP/UDP/RTP packet and outputting retransmission control information according to the extracted identifying data.

60. The data transmitting/receiving system of claim 59, wherein the data transmission unit comprises:
an identifying data generator adding the identifying data to the IP/UDP/RTP packet, the identifying data comprising a data type of the payload data of the IP/UDP/RTP packet and/or a temporal data sequence of the payload data;
a packet divider segmenting the IP/UDP/RTP packet added with the identifying data into an IP/UDP/RTP header and IP/UDP/RTP data; a communication unit transmitting the separated IP/UDP/RTP header and the IP/UDP/RTP data, and receiving the retransmission control information; and a retransmission unit retransmitting the reception error occurring IP/UDP/RTP data according to the retransmission control information.

61. The data transmitting/receiving system of claim 60, wherein the identifying data generator adds the identifying data to a UDP header of the IP/UDP/RTP header.

62. The data transmitting/receiving system of claim 61, wherein the payload data is either an intra picture or an inter picture.

63. The data transmitting/receiving system of claim 62, wherein, with respect to the intra picture, the identifying data added by the identifying data generator specifies a higher priority than a priority specified by the identifying data added for the inter picture.

64. The data transmitting/receiving system of claim 60, wherein the identifying data generator adds the identifying data specifying a priority in the temporal data sequence.

65. The data transmitting/receiving system of claim 60, wherein the IP/UDP/RTP header and the IP/UDP/RTP data are transmitted in a radio link protocol (RLP) packet.

66. The data transmitting/receiving system of claim 60, wherein the data transmission unit further comprises a header compression unit compressing the IP/UDP/RTP header.

67. The data transmitting/receiving system of claim 59, wherein the data reception unit comprises:
a communication unit receiving an IP/UDP/RTP header and IP/UDP/RTP data corresponding to the IP/UDP/RTP packet, and transmitting the retransmission control information; and
a retransmission controller extracting the identifying data when there is a reception error in the IP/UDP/RTP data and outputting the retransmission control information based on the extracted identifying data, the identifying data being extracted from the received IP/UDP/RTP header based on a data type of the payload data of the received IP/UDP/RTP data and/or a temporal data sequence of the payload data.

68. The data transmitting/receiving system of claim 67, wherein the retransmission controller comprises:
a check unit checking an occurrence of reception error in the IP/UDP/RTP data corresponding to the received IP/UDP/RTP header;
an identifying data extractor extracting the identifying data from the IP/UDP/RTP header corresponding to the reception error occurring IP/UDP/RTP data; and
a retransmission control information generator generating the retransmission control information according to the extracted identifying data.

69. The data transmitting/receiving system of claim 60, wherein the IP/UDP/RTP header and the IP/UDP/RTP data are transmitted to different channels, respectively.

70. The data transmitting/receiving system of claim 69, wherein the channels are wireless channels, and the channel transmitting the IP/UDP/RTP header has a lower transmission error rate than the channel transmitting the IP/UDP/RTP data.

71. The data transmitting/receiving system of claim 69, wherein the retransmission control information includes a packet number of the reception error occurring IP/UDP/RTP data and retransmission times.

72. The data transmitting/receiving system of claim 71, wherein the data transmission unit further comprises a monitor monitoring a status of the channel where the IP/UDP/RTP data is transmitted, wherein,
when the status of the channel, where the IP/UDP/RTP data is transmitted, is below a lowest threshold, the data transmission unit retransmits the IP/UDP/RTP data according to a lower retransmission times than the received retransmission times.

73. The data transmitting/receiving system of claim 72, wherein, when the status of the channel transmitting the IP/UDP/RTP data is above a highest threshold, the data transmission unit retransmits the IP/UDP/RTP data according to higher retransmission times than the received retransmission times.

74. The data transmitting/receiving system of claim 69, wherein the retransmission control information includes a packet number of the reception error occurring IP/UDP/RTP data and a retransmission priority.

75. The data transmitting/receiving system of claim 74, wherein the data transmission unit further comprises a monitor monitoring a status of the channel where the IP/UDP/RTP data is transmitted, wherein,
when the status of the channel transmitting the IP/UDP/RTP data is below a lowest threshold, the data transmission unit retransmits the IP/UDP/RTP data according to a lower retransmission priority than the received retransmission priority.

76. The data transmitting/receiving system of claim 75, wherein, when the status of the channel transmitting the IP/UDP/RTP data is above a highest threshold, the data transmission unit retransmits the IP/UDP/RTP data according to a retransmission priority two times or more higher than the received retransmission priority.

77. The data transmitting/receiving system of claim 60, wherein the retransmission control information includes a packet number of the reception error occurring IP/UDP/RTP data and a retransmission information, wherein, the retransmission information is either retransmission times or a retransmission priority.

78. The data transmitting/receiving system of claim 77, wherein, when the data transmission unit receives the retransmission control information, the data transmission unit retransmits the IP/UDP/RTP data, for which the retransmission is requested, according to the received retransmission control information and as frequently as the retransmission times.

79. The data transmitting/receiving system of claim 77, wherein, when the data transmission unit receives the retransmission information, the data transmission unit retransmits the IP/UDP/RTP data, for which retransmission is requested, according to the received retransmission control information and according to the received retransmission priority.

80. A data transmitting/receiving method, comprising
transmitting an IP/UDP/RTP packet having identifying data about a payload data of the IP/UDP/RTP packet ; and
receiving the IP/UDP/RTP packet, and when a reception error occurs in the IP/UDP/RTP packet, extracting the identifying data from the received IP/UDP/RTP packet, and outputting retransmission control information that is generated according to the extracted identifying data.

81. The data transmitting/receiving method of claim 80, wherein the transmitting comprises
generating an IP/UDP/RTP packet added with the identifying data, the identifying data comprising a data type of the payload data of the IP/UDP/RTP packet and/or a temporal data sequence of the payload data; and
segmenting the IP/UDP/RTP packet added with the identifying data into an IP/UDP/RTP header and IP/UDP/RTP data and transmitting the separated IP/UDP/RTP header and data.

82. The data transmitting/receiving method of claim 81, wherein the identifying data is added to a UDP header of the IP/UDP/RTP header.

83. The data transmitting/receiving method of claim 80, wherein the payload data is either an intra picture or an inter picture.

84. The data transmitting/receiving method of claim 83, wherein, with respect to the intra picture, the added identifying data specifies a higher priority than a priority specified by the identifying data added for the inter picture.

85. The data transmitting/receiving method of claim 80, wherein the added identifying data specifies a priority according to the temporal data sequence.

86. The data transmitting/receiving method of claim 81, further comprising compressing the IP/UDP/RTP header, prior to the transmitting.

87. The data transmitting/receiving method of claim 81, wherein the IP/UDP/RTP header and the IP/UDP/RTP data are transmitted in a radio link protocol (RLP) packet.

88. The data transmitting/receiving method of claim 81, wherein the IP/UDP/RTP header and the IP/UDP/RTP data are transmitted to different channels, respectively.

89. The data transmitting/receiving method of claim 88, wherein the channels are wireless channels, and the channel transmitting the IP/UDP/RTP header has a lower transmission error rate than the channel transmitting the IP/UDP/RTP data.

90. The data transmitting/receiving method of claim 81, wherein the receiving comprises :
receiving the IP/UDP/RTP header and the IP/UDP/RTP data;
checking an occurrence of reception error of the IP/UDP/RTP data;
extracting the identifying data from the IP/UDP/RTP header corresponding to the reception error occurring IP/UDP/RTP data ;
generating retransmission control information based on the extracted identifying data; and
transmitting the generated retransmission control information.

91. The data transmitting/receiving method of claim 90, wherein the retransmission control information includes a packet number of the reception error occurring IP/UDP/RTP data and retransmission times.

92. The data transmitting/receiving method of claim 91, further comprising retransmitting the IP/UDP/RTP data, for which the retransmission is requested, according to the retransmission control information as frequently as the retransmission times.

93. The data transmitting/receiving method of claim 91, wherein, when a status of the channel transmitting the IP/UDP/RTP data is below a lowest threshold, the IP/UDP/RTP data is retransmitted according to lower retransmission times that the received retransmission times.

94. The data transmitting/receiving method of claim 93, wherein, when the status of the channel transmitting the IP/UDP/RTP data is above a highest threshold, the IP/UDP/RTP data is retransmitted according to higher retransmission times than the received retransmission times.

95. The data transmitting/receiving method of claim 90, wherein the retransmission control information includes a packet number of the reception error occurring IP/UDP/RTP data and a retransmission priority.

96. The data transmitting/receiving method of claim 95, further comprising retransmitting the IP/UDP/RTP data, for which the retransmission is requested, according to the retransmission control information and according to the received retransmission priority.

97. The data transmitting/receiving method of claim 95, wherein, when a status of the channel transmitting the IP/UDP/RTP data is determined to be below a lowest threshold as a result of monitoring the channel status, the IP/UDP/RTP data is retransmitted according to a lower priority than the received retransmission priority.

98. The data transmitting/receiving method of claim 97, wherein, when the status of the channel transmitting the IP/UDP/RTP data is below a highest threshold, the IP/UDP/RTP is retransmitted according to a priority two times or more higher than the received retransmission priority.

99. A data transmitter/receiver system transmitting/receiving streaming multimedia data over a network, comprising:
a programmed processor transmitting multimedia data packets to a data receiver, adding characteristic information about the multimedia data in the packets; receiving retransmission control information based upon the added characteristic information from the receiver upon loss of and/or damage to the multimedia data packets; and retransmitting the lost and/or damaged multimedia data packets according to the received retransmission control information, thereby retransmitting the multimedia data responsive to the characteristic of the multimedia data.

100. The system of claim 99, wherein the multimedia data packets are IP/UDP/RTP packets.

101. A data transmitter/receiver system transmitting/receiving streaming multimedia data over a network, comprising:
a programmed processor transmitting multimedia data packets to a data receiver and managing retransmissions of the data packets responsive to retransmission requests from the data receiver by varying frequency and/or priority of the retransmissions according to characteristic information about the multimedia data in the packets.

102. The system of claim 101, wherein the programmed processor further divides the data packets into a header portion and a data portion and transmits/retransmits the header portion and the data portion via different channels, respectively.

103. The system of claim 101, wherein the programmed processor further varies the frequency and/or priority of the retransmissions according to a status of the channel transmitting the data portion.

104. The system of claim 102, wherein the programmed processor further selects a channel for the header portion that has a lower transmission error rate than a channel selected for the data portion.

105. The system of claim 104, wherein the programmed processor further compresses the header portion prior to the transmissions/retransmissions.
